# EUROPÄISCHE PATENTSCHRIFT

(11) **EP 0 995 036 B1**
(45) Veröffentlichungstag und Bekanntmachung des Hinweises auf die Patenterteilung: **04.08.2004**
(21) Anmeldenummer: 98966590.6
(22) Anmeldetag: 29.12.1998
(51) Int. Cl.: F04B 17/03, H02K 5/24, B60T 8/40, F16C 27/06

(54) **PUMPENEINHEIT**
PUMP UNIT
ENSEMBLE POMPE

(30) Priorität: 26.03.1998 DE 19813301
(43) Veröffentlichungstag der Anmeldung: 26.04.2000
(73) Patentinhaber: ROBERT BOSCH GMBH, 70442 Stuttgart (DE)
(72) Erfinder: SIEGEL, Heinz, D-70435 Stuttgart (DE)
(86) Internationale Anmeldenummer: PCT/DE1998/003806
(87) Internationale Veröffentlichungsnummer: WO 1999/049215

(56) Entgegenhaltungen:
- EP-A- 0 220 581
- WO-A-94/27045
- DE-A- 4 118 950
- US-A- 2 015 784
- US-A- 5 839 349

## Beschreibung

### Stand der Technik

Die Erfindung geht aus von einer Pumpeneinheit nach der Gattung des Anspruchs 1.

Aus der WO 94/27045 A1 ist eine derartige Pumpeneinheit aus einer Kolbenpumpe in einem Pumpenblock und einem am Pumpenblock angebauten Antriebsmotor bereits bekannt. Der Antriebsmotor bildet mit seiner, die Kolbenpumpe antreibenden Welle, einem die Welle lagernden Lager und einem Motorgehäuseteil eine Vormontagbaugruppe. Im angebauten Zustand dieser Vormontagebaugruppe am Pumpenblock besteht im Bereich des Außenrings des Lagers und dessen Aufnahme im Pumpenblock eine radiale Spielpassung. Zur Verdrehsicherung des Außenrings des Lagers ist deshalb eine Klebstoffmasse in eine zu diesem Außenring hinführende Bohrung gespritzt. Nachteiligerweise vermag diese Klebstoffmasse jedoch keine optimal spielfrei Verbindung zwischen beiden Baueinheiten zu schaffen, so dass nach wie vor unerwünschte Betriebsgeräusche auftreten können.

Aus der DE 44 30 909 A1 und der US 5,564,909 ist eine weitere aus einer Kolbenpumpe und einem die Kolbenpumpe antreibenden Antriebsmotor bestehende Pumpeneinheit bekannt. Die Pumpenkolben der Kolbenpumpe befinden sich in einem Pumpenblock, an dem das Motorgehäuse des Antriebsmotors angeflanscht ist. Eine vom Antriebsmotor angetriebene, aus dem Motorgehäuse in den Pumpenblock ragende Welle dient zum Antreiben der Pumpenkolben der Kolbenpumpe. Das Motorgehäuse hat einen in eine im Pumpenblock vorgesehene Vertiefung hineinragenden Vorsprung. Dieser Vorsprung des Motorgehäuses hält ein Lager, an dem die Welle gelagert ist.

Nachteilig bei der in der DE 44 30 909 A1 und in der US 5,564,909 gezeigten Pumpeneinheit ist, daß die an dem mittleren Lager auftretenden Lagerkräfte von dem Motorgehäuse nicht optimal aufgenommen werden können. Die DE 195 36 794 A1 zeigt eine Ausführung, bei der versucht wird, dieses Problem dadurch zu lösen, daß das Lager zwischen dem Antriebsmotor und den Pumpenkolben unmittelbar in den Pumpenblock eingebaut wird. Allerdings entstehen dadurch erhebliche fertigungstechnische Schwierigkeiten, weil bei dieser Ausführung ein separater Zusammenbau und ein eventuelles separates Prüfen des Antriebsmotors vor dem Anbau an den Pumpenblock nicht möglich ist.

Es hat sich gezeigt, daß die nicht optimal spielfreie Verbindung zwischen dem Antriebsmotor und dem Pumpenblock zur Entstehung von Geräuschen beiträgt.

Bei der DE 44 30 909 A1 und der US 5,564,909 besteht eine radiale Spielpassung zwischen dem in den Pumpenblock hineinragenden Ende der Welle und dem inneren Lagerring des dortigen Lagers, damit das Zusammenfügen der Bauteile möglich ist. Auch bei diesem Lager besteht das Problem, daß diese Spielpassung zusätzlich zur Geräuschentwicklung beiträgt.

Weil trotz höchster Fertigungsgenauigkeit Toleranzen und Spielpassungen nicht ganz vermieden werden können, muß mit dadurch entstehenden unangenehmen Geräuschen gerechnet werden.

DE 44 30 909 A1 und DE 195 36 794 A1 zeigen Pumpeneinheiten, bei denen die Welle am vom Pumpenblock abgewandten Ende mit einem weiteren Lager im Motorgehäuse gelagert ist. Allerdings ist bisher der Aufwand zur Herstellung dieses Lagers und der erhebliche Platzbedarf für dieses Lager von großem Nachteil.

### Vorteile der Erfindung

Die erfindungsgemäße Pumpeneinheit mit den kennzeichnenden Merkmalen des Anspruchs 1 hat demgegenüber den Vorteil, daß bei geringem Herstellungsaufwand ein erhebliches Vermindern der von der Pumpeneinheit erzeugten Geräusche und häufig auch eine Verbesserung der Dauerhaltbarkeit erreichbar ist.

Die Spielpassung kann vorteilhafterweise so ausreichend reichlich sein, daß ein sehr einfaches Anfügen des Antriebsmotors zusammen mit der Welle an den Pumpenblock möglich ist.

Weil das Motorgehäuse, die Welle und das mindestens eine vom Motorgehäuse gehaltene Lager eine Vormontagebaugruppe bilden, bleibt der Vorteil eines geringen Herstellungsaufwands und der Vorteil, daß man bei Bedarf den Antriebsmotor zusammen mit der Welle vor dem Anbau an den Pumpenblock separat prüfen kann, erhalten; und zusätzlich erhält man den Vorteil, daß die Lagerkräfte des mindestens einen Lagers optimal vom relativ steifen Pumpenblock aufgefangen werden können, was ein erhebliches Maß an Geräuschreduzierung ergibt. Durch den Gewinn an Steifigkeit ist es vorteilhafterweise ohne Risiko möglich, die eingesetzten Materialstärken, insbesondere die Wandstärke des Motorgehäuses bzw. die Dicke des Pumpenblocks, zu reduzieren.

Durch die in den Unteransprüchen aufgeführten Maßnahmen sind vorteilhafte Weiterbildungen und Verbesserungen der im Hauptanspruch angegebenen Pumpeneinheit möglich.

Durch das Einspritzen von Kunststoff, der beispielsweise durch Erwärmen flüssig gemacht werden kann oder der beispielsweise erst nach einiger Zeit durch chemische Reaktion aushärtet, in die Spielpassung, erhält man den Vorteil, daß durch das leicht mögliche Einbringen des Kunststoffs der Herstellungsaufwand insgesamt nicht wesentlich erhöht wird.

Das vom Motorgehäuse gehaltene erste Lager zwischen dem mindestens einen Pumpenkolben und dem Antriebsmotor übernimmt einen wesentlichen Teil der auf die Welle einwirkenden Kräfte. Durch das Beseitigen der radialen Spielpassung bei dem in die Vertiefung des Pumpenblocks hineinragenden Vorsprung des Motorgehäuses mit dem eingebrachten Kunststoff erhält man den Vorteil, daß der wesentliche Teil der Lagerkräfte vom Pumpenblock aufgefangen werden kann, was für die Dauerhaltbarkeit der Pumpeneinheit und für eine wirkungsvolle Geräuschreduzierung von wesentlicher Bedeutung ist.

Durch das Aufheben der Spielpassung zwischen dem zweiten Lager und dem Pumpenblock erhält man den Vorteil, daß im Bereich des zweiten Lagers das Entstehen von unangenehmen Geräuschen beseitigt oder zumindest stark gemindert ist.

Weil das zweite Lager mit radialer Spielpassung in den Pumpenblock eingebaut werden kann, kann das zweite Lager vor dem Anbau des Antriebsmotors an den Pumpenblock fest mit der aus dem Motorgehäuse herausragenden Welle verbunden werden, was auf vorteilhafte Weise den Herstellungsaufwand wesentlich verringert und die Prüfmöglichkeit wesentlich erhöht.

Wird sowohl im Bereich des ersten Lagers als auch im Bereich des zweiten Lagers das radiale Spiel zwischen diesen beiden Lagern und dem Pumpenblock durch den eingebrachten Kunststoff aufgehoben, so erhält man den Vorteil, daß an beiden Lagern die Geräuschentwicklung beseitigt bzw. stark gemindert ist.

Wird die Welle im Motorgehäuse über einen am Motorgehäuse vorgesehenen Lagerzapfen gelagert, der in eine die Welle axial überragende Buchse eingreift, so erhält man den Vorteil, daß bei geringem Herstellungsaufwand und ohne daß der erforderliche Bauraum merkbar größer wird, der Antriebsmotor wesentlich steifer wird. Ein weiterer Vorteil ist, daß die Welle für das weitere Lager nicht extra bearbeitet werden muß, insbesondere muß auch das dem weiteren Lager zugewandte Ende der Welle stirnseitig nicht angebohrt werden, was einen erheblichen Aufwand bedeuten würde.

Durch das Eingreifen des Lagerzapfens in die Buchse erhält man den weiteren Vorteil, daß der Durchmesser des weiteren Lagers relativ groß gewählt werden kann, ohne daß dadurch zusätzlicher Herstellungsaufwand oder Materialaufwand entsteht.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 ein erstes ausgewähltes Ausführungsbeispiel im Längsschnitt, die Figuren 2 und 3 verschiedene Einzelheiten und die Figur 4 ein weiteres ausgewähltes Ausführungsbeispiel im Längsschnitt.

### Beschreibung der Ausführungsbeispiele

Die Kolbenpumpe der erfindungsgemäß ausgeführten Pumpeneinheit ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Radbremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

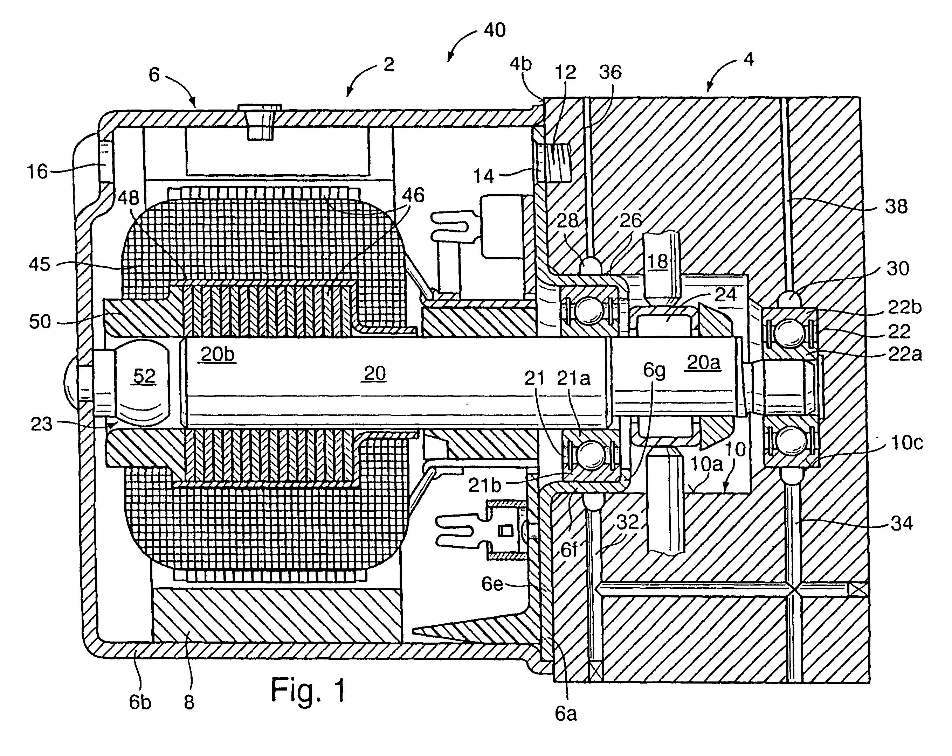

Die **Figur 1** zeigt beispielhaft einen Längsschnitt durch eine bevorzugt ausgewählte Pumpeneinheit. Die Pumpeneinheit besteht im wesentlichen aus einem elektrischen Antriebsmotor 2 und einem Pumpenblock 4. Die Pumpeneinheit arbeitet als Kolbenpumpe. Ein Motorgehäuse 6 schützt das Innere des Antriebsmotors 2 vor schädlichen Umwelteinflüssen und dient zum Tragen von Permanentmagneten 8 des Stators des Antriebsmotors 2. Beim bevorzugt ausgewählten Ausführungsbeispiel ist das Motorgehäuse 6 aus einem ersten Motorgehäuseteil 6a und einem zweiten Motorgehäuseteil 6b zusammengesetzt. Das zweite Motorgehäuseteil 6b ist topfförmig ausgebildet mit seiner Öffnung in Richtung des Pumpenblocks 4. Das erste Motorgehäuseteil 6a verschließt die dem Pumpenblock 4 zugewandte Öffnung des topfartigen zweiten Motorgehäuseteils 6b. Abweichend zur bildlichen Darstellung ist es auch möglich, daß das erste Motorgehäuseteil 6a topfförmig ausgebildet ist mit seiner Öffnung in Richtung weg vom Pumpenblock 4. In diesem Fall würde das beispielsweise scheibenartige zweite Motorgehäuseteil 6b das topfförmige erste Motorgehäuseteil 6a verschließen.

Der Pumpenblock 4 hat eine dem Antriebsmotor 2 zugewandte Stirnseite 4b. Ausgehend von der Stirnseite 4b verläuft eine Vertiefung 10 in den Pumpenblock 4. Die Vertiefung 10 beginnt an der Stirnseite 4b mit einem größeren Durchmesser 10a und geht dann innerhalb des Pumpenblocks 4 über in einen kleineren Durchmesser 10c.

Der Pumpenblock 4 ist mit dem Motorgehäuse 6 vereinigt und weist zu diesem Zweck an der Stirnseite 4b wenigstens ein Gewindeloch 12 auf. Diesem Gewindeloch 12 ist im Motorgehäuseteil 6a ein Loch 14 und im Motorgehäuseteil 6b ein Loch 16 zugeordnet. Durch die Löcher 14 und 16 ist eine nicht dargestellte Schraube durchsteckbar, mittels der der elektrische Antriebsmotor 2 und der Pumpenblock 4 der Kolbenpumpe zu der Pumpeneinheit zusammenspannbar sind.

Im Pumpenblock 4 ist eine nicht dargestellte Führungsbuchse vorgesehen, in der ein Pumpenkolben 18 verschiebbar gelagert ist. Der Pumpenkolben 18 kann auch direkt im Pumpenblock 4 gelagert sein, so daß auf die Führungsbuchse verzichtet werden kann. Neben dem mindestens einen Pumpenkolben 18 können weitere radial angeordnete Pumpenkolben 18 vorgesehen sein. Insgesamt hat die Pumpeneinheit beispielsweise zwei oder vier Pumpenkolben 18. Der besseren Übersichtlichkeit wegen sind in der Zeichnung von zwei Pumpenkolben 18 nur die nach innen gerichteten Enden dargestellt.

Innerhalb der Pumpeneinheit gibt es eine Welle 20. Die Welle 20 hat ein in den Pumpenblock 4 hineinragendes Wellenende 20a und ein in das Motorgehäuses 6 hineinragendes Wellenende 20b. Das Motorgehäuseteil 6a des Motorgehäuses 6 hat einen radial zur Welle 20 verlaufenden äußeren Bereich 6e, einen axial zur Welle 20 verlaufenden mittleren Bereich 6f und einen schmalen radial zur Welle 20 verlaufenden inneren Bereich 6g. Innerhalb des umlaufenden mittleren axialen Bereichs 6f des Motorgehäuses 6 ist ein erstes Lager 21 vorgesehen. Das Lager 21 wird vom Bereich 6f des Motorgehäuses 6 getragen. Für das erste Lager 21 wurde ein Wälzlager, genauergesagt ein Kugellager, ausgewählt. Das Lager 21 hat einen inneren Lagerring 21a und einen äußeren Lagerring 21b. An dem in den Pumpenblock 4 hineinragenden Wellenende 20a der Welle 20 ist ein zweites Lager 22 vorgesehen. Das zweite Lager 22 ist ein Wälzlager, genauergesagt ein Kugellager, mit einem inneren Lagerring 22a und einem äußeren Lagerring 22b. Beim bevorzugt ausgewählten Ausführungsbeispiel ist im Bereich des dem Pumpenblock 4 abgewandten Wellenendes 20b ein weiteres Lager 23 vorgesehen. Das weitere Lager 23 ist vorzugsweise ein Gleitlager.

Zwischen dem ersten Lager 21 und dem zweiten Lager 22 gibt es ein Exzenterlager 24. Zwischen den beiden Lagern 21 und 22 hat die Welle 20 einen Bereich, der exzentrisch zur Längsachse der Welle 20 verläuft. Auf diesem exzentrischen Bereich der Welle 20 befindet sich das Exzenterlager 24. Das Exzenterlager 24 ist ein Wälzlager, genauergesagt ein Rollen- bzw. Nadellager. Die Pumpenkolben 18 stützen sich am Außenring des Exzenterlagers 24 ab und werden bei Drehung der Welle 20 zu hin- und hergehenden Bewegungen angetrieben. Die Pumpenkolben 18 verursachen über das Exzenterlager 24 erhebliche Radialkräfte auf die beiden Lager 21 und 22.

Der Innenring 21a des ersten Lagers 21 ist auf die Welle 20 fest aufgepreßt. Der Außenring 21b ist in den mittleren axialen Bereich 6f des Motorgehäuses 6 fest hineingepreßt, bis er an dem inneren radialen Bereich 6g zur Anlage kommt. Der innere Ring 22a des zweiten Lagers 22 ist auf die Welle 20 fest aufgepreßt. Weil während des Aufpressens der Lager 21 und 22 auf die Welle 20 und während des Hineinpressens des Lagers 21 in das Motorgehäuseteil 6a die Lager 21 und 22 leicht zugänglich sind, kann das Hineinpressen bzw. Aufpressen der Lager 21 und 22 mit einfachem Werkzeug, beispielsweise mit Preßstempeln, leicht geschehen, ohne daß eine Beschädigung der Lager 21 und 22 oder eines sonstigen Bauteils befürchtet werden muß. Das Ein- bzw. Aufpressen der Lager 21 und 22 kann räumlich getrennt und lange vor dem Anbauen des Antriebsmotors 2 an den Pumpenblock 4 geschehen.

Der mittlere axiale Bereich 6f des Motorgehäuses 6 bildet einen umlaufenden Vorsprung 26. Der Vorsprung 26 verläuft konzentrisch zur Welle 20. Der Vorsprung 26 ragt in die Vertiefung 10 des Pumpenblocks 4 hinein.

Im größeren Durchmesser 10a der Vertiefung 10 ist im Bereich des Vorsprungs 26 eine umlaufende Tasche 28 in Form einer umlaufenden Nut vorgesehen. Eine weitere umlaufende Nut, die eine weitere Tasche 30 bildet, ist am kleineren Durchmesser 10c der Vertiefung 10 im Bereich des äußeren Lagerrings 22b des Lagers 22 vorgesehen. In die Tasche 28 mündet ein Füllanschluß 32. Auch in die andere Tasche 30 mündet ein Füllanschluß 34. Die Füllanschlüsse 32 und 34 haben Verbindung zur Oberfläche des Pumpenblocks 4, so daß über die Füllanschlüsse 32, 34 ein fließfähiges Material in die Taschen 28 und 30 eingebracht werden kann. Damit während des Einbringens des fließfähigen Materials in die Taschen 28, 30 die Luft aus den Taschen 28, 30 entweichen kann, sind Entlüftungsanschlüsse 36 und 38 vorgesehen.

Der Antriebsmotor 2, das Motorgehäuseteil 6a bzw. das Motorgehäuse 6, die Welle 20 und das vom Motorgehäuse 6 gehaltene Lager 21 bilden eine Vormontagebaugruppe 40, die räumlich und zeitlich unabhängig vom Pumpenblock 4 zusammengebaut und bei Bedarf geprüft werden kann. Es wird bevorzugt vorgeschlagen, auch das zweite Lager 22 an die Vormontagebaugruppe 40 anzubauen, bevor die Vormontagebaugruppe 40 an den Pumpenblock 4 angebaut wird. In diesem Fall kann das zweite Lager 22 als weiterer Bestandteil der Vormontagebaugruppe 40 betrachtet werden.

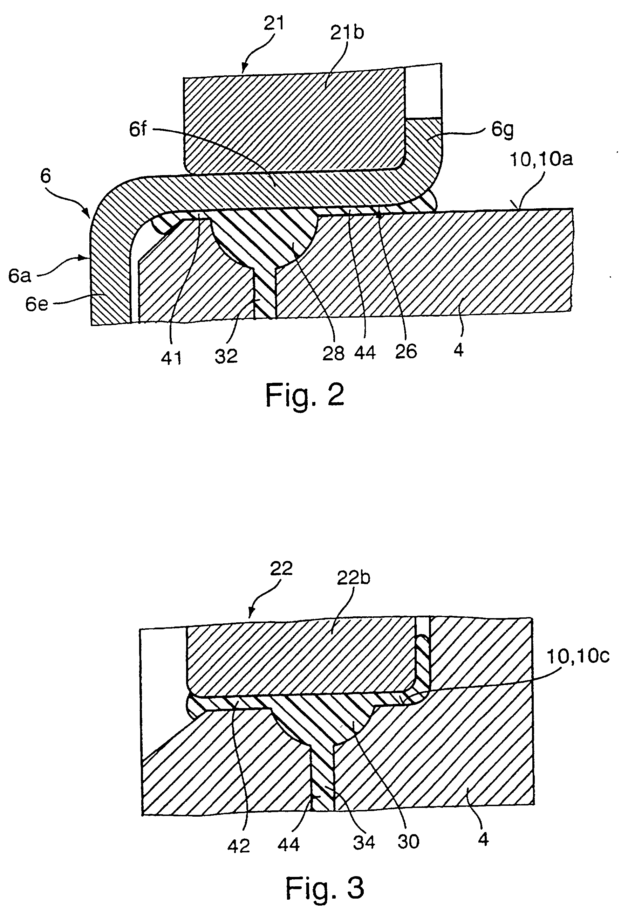

Damit die Vormontagebaugruppe 40 leicht an den Pumpenblock 4 angebaut werden kann, ist zwischen dem Vorsprung 26 und der Vertiefung 10 eine radiale Spielpassung 41 (Fig. 2) vorgesehen. Eine weitere radiale Spielpassung 42 (Fig. 3) ist zwischen dem Außenumfang des äußeren Lagerrings 22b des Lagers 22 und dem kleineren Durchmesser 10c der Vertiefung 10 vorgesehen. Weil der radiale Abstand, bzw. die Spielpassung 41, zwischen dem Vorsprung 26 und dem Pumpenblock 4 und auch der radiale Abstand, bzw. die Spielpassung 42, zwischen dem Lager 22 und dem Pumpenblock 4 bei dem für die Figur 1 gewählten Abbildungsmaßstab kaum erkennbar sind, ist der Bereich mit dem radialen Abstand zwischen dem Vorsprung 26 und dem Pumpenblock 4 in der Figur 2 als Einzelheit mit geändertem Maßstab nochmals wiedergegeben, und in der Figur 3 ist der den radialen Abstand zwischen dem Lager 22 und dem Pumpenblock 4 zeigende Bereich mit geändertem Maßstab als Ausschnitteinzelheit nochmals wiedergegeben.

Die **Figuren 2 und 3** zeigen verschiedene Einzeilheiten.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die Figur 1 zeigt die Taschen 28 und 30 bevor das fließfähige Material eingebracht wird. Die Figuren 2 und 3 zeigen die Taschen 28 und 30 und die Spielpassungen 41, 42, nachdem ein Kunststoff 44 eingebracht wurde. Der durch den Füllanschluß 32 in die Tasche 28 als fließfähiges Material hineingedrückte Kunststoff 44 verteilt sich innerhalb der Tasche 28 im wesentlichen über den gesamten Umfang des Vorsprungs 26. Von der Tasche 28 aus wird der Kunststoff 44 in die radiale Spielpassung 41 zwischen dem Vorsprung 26 und dem Pumpenblock 4 hineingedrückt. Nachdem der Kunststoff 44 als Flüssigkeit oder als Paste hineingebracht wurde, erhärtet er beispielsweise durch Abkühlung oder infolge chemischer Reaktion. Dadurch wird der Vorsprung 26 des Motorgehäuses 6 spielfrei und fest in den Pumpenblock 4 eingebettet. Vorgeschlagen wird, in die Taschen 28 und 30 einen Kunststoff 44 einzufüllen, der während seiner Aushärtung nicht schrumpft, besser noch, der während seiner Aushärtung eine geringe Volumenzunahme erfährt. Der Kunststoff 44 kann auch so beschaffen sein, daß er das Motorgehäuses 6 bzw. den Lagerring 22b mit dem Pumpenblock 4 verklebt.

Weil, wie bereits erwähnt, der innere Lagerring 21a des Lagers 21 spielfrei mit der Welle 20 verbunden ist und weil ferner der äußere Lagerring 21b spielfrei mit dem axialen Bereich 6f des Motorgehäuses 6 verbunden ist und weil durch den Kunststoff 44 in der Tasche 28 bzw. in der Spielpassung 41 das Motorgehäuse 6 im Bereich des Lagers 21 fest oder zumindest stramm mit dem Pumpenblock 4 verbunden ist, ergibt sich im Bereich des Lagers 21 eine in radialer Richtung insgesamt spielfreie Lagerung der Welle 20, was sich insgesamt bei der Dauerhaltbarkeit und durch besonders geringe Geräuschentwicklung bemerkbar macht.

Weil, wie weiter vorne in der Beschreibung bereits vorgeschlagen, der innere Lagerring 22a des zweiten Lagers 22 spielfrei mit der Welle 20 verbunden ist und weil durch den Kunststoff 44 in der Tasche 30 und in der radialen Spielpassung 42 auch der äußere Lagerring 22b spielfrei im Pumpenblock 4 eingebettet ist, ist die Welle 20 auch im Bereich des zweiten Lagers 22 spielfrei gelagert, was sich auch hier durch insgesamt gute Dauerhaltbarkeit und besonders geringe Geräuschentwicklung positiv bemerkbar macht.

Auf der Welle 20 und innerhalb des Motorgehäuses 4 befindet sich ein Rotor des elektrischen Antriebsmotors 2. Der Rotor besteht im wesentlichen aus einer aus isoliertem Kupferdraht gewickelten Spule 45 und aus einem als Anker dienenden, außen offenen Blechpaket 46. Das Blechpaket 46 besteht aus übereinander geschichteten ausgestanzten Blechen. Als Schutz für die Spule 45 wird zwischen dem Blechpaket 46 und der Spule 45 üblicherweise eine Kunststoffisolierung 48 vorgesehen. Beim bevorzugt ausgewählten Ausführungsbeispiel erstreckt sich die Kunststoffisolierung 48 zusätzlich in axialer Richtung über das vom Pumpenblock 4 abgewandte Wellenende 20b hinaus. Der die Welle 20 axial überragende Bereich der Kunststoffisolierung 48 hat die Form einer Buchse 50. Die Buchse 50 und der übrige Bereich der Kunststoffisolierung 48 werden vorzugsweise zusammen in einer gemeinsamen Form gegossen oder gespritzt. Die Buchse 50 und der übrige Bereich der Kunststoffisolierung 48 sind also ein einheitliches in einem Arbeitsgang formbares, zusammenhängendes Bauteil. Die Buchse 50 und der übrige Bereich der Kunststoffisolierung 48 können aber auch zwei getrennt geformte aus Kunststoff bestehende zusammengefügte Bauteile sein.

An den Boden des topfartigen Motorgehäuseteils 6b ist in der Mitte ein Lagerzapfen 52 angenietet, angeschraubt oder angeschweißt. Der Außendurchmesser des Lagerzapfens 52 ist ballig bzw. kugelig geformt und paßt mit geringem Lagerspiel in den Innendurchmesser der Buchse 50. Durch die ballige bzw. kugelige Form des Lagerzapfens 52 ist sichergestellt, daß sich die Welle 20 winkelmäßig gegenüber dem Motorgehäuse 4 ausrichten kann, so daß es im Bereich des weiteren Lagers 23 zu keinem Problem, insbesondere zu keinem Klemmen, kommen kann.

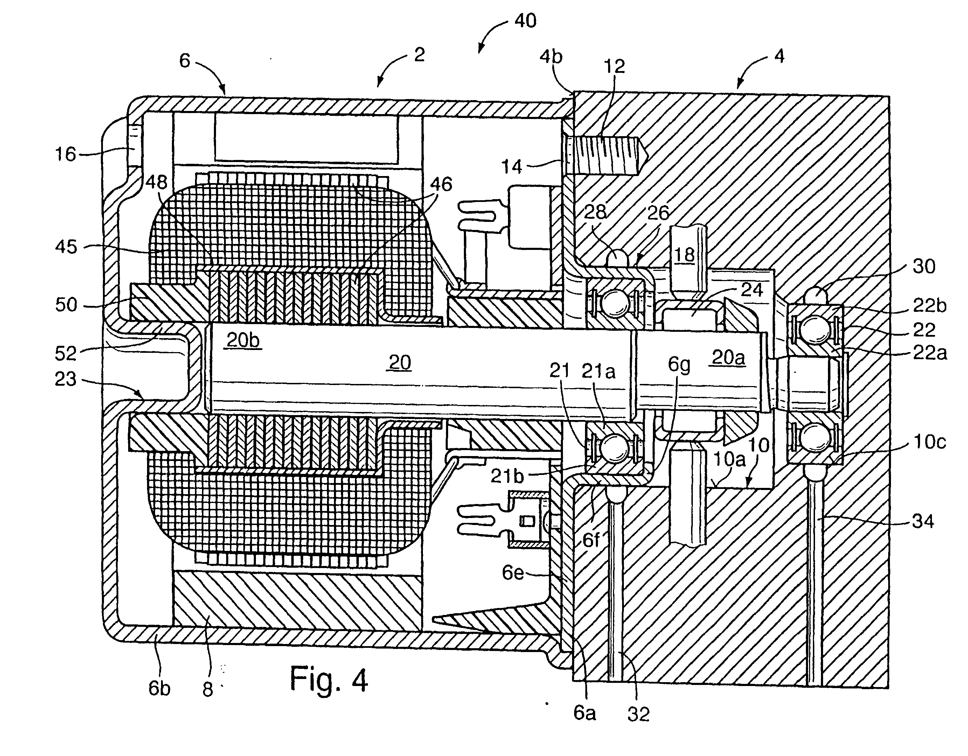

Die Figur 4 zeigt ein weiteres ausgewähltes, besonders vorteilhaftes Ausführungsbeispiel.

Bei dem in der Figur 4 dargestellten Ausführungsbeispiel wird der Lagerzapfen 52 des weiteren Lagers 23 dadurch gebildet, daß das Motorgehäuseteil 6b des Motorgehäuses 6 in der Mitte des Bodens konzentrisch zur Welle 20 eine nach innen gerichtete Ausbuchtung hat. Wie die Figur 4 zeigt, kann der Lagerzapfen 52 durch entsprechende Formgestaltung beim Stanzen bzw. Tiefziehen des Motorgehäuses 6 direkt an das Motorgehäuse 6 angeformt werden. Ferner sei darauf hingewiesen, daß der Innendurchmesser der Buchse 50 des Lagers 23 auch größer als der Außendurchmesser der Welle 20 sein kann, was sich günstig bei der Stabilität des weiteren Lagers 23, insbesondere bei der Stabilität des Lagerzapfens 52, bemerkbar macht.

Die Füllanschlüsse 32 und 34 können, wie die Figur 4 zeigt, jeder für sich von außen her zugänglich sein, so daß die beiden Taschen 28 und 30 unabhängig voneinander mit dem Kunststoff 44 befüllt werden können. Es ist aber auch möglich, wie die Figur 1 zeigt, die beiden Füllanschlüsse 32 und 34 innerhalb des Pumpenblocks 4 miteinander zu verbinden, so daß zum Befüllen der Taschen 28 und 30 weniger Anschlüsse angeschlossen werden müssen. Bei dem in der Figur 4 gezeigten Ausführungsbeispiel wurde auf die Entlüftungsanschlüsse 36 und 38 gemäß Figur 1 verzichtet, was je nach Dimensionierung der Taschen 28, 30 und der radialen Spielpassungen 41 und 42 möglich ist.

Wegen der radialen Spielpassungen 41 bzw. 42 im Bereich des Lagers 21 bzw. 22, die nach dem Zusammenfügen durch den eingebrachten Kunststoff 44 beseitigt werden, erfolgt eine optimale Ausrichtung der Welle 20, ohne daß infolge der dreifachen Lagerung der Welle 20 eine erhöhte Belastung der Welle 20 oder sogar ein Verbiegen der Welle 20 befürchtet werden muß.

Weil die beiden Spielpassungen 41 und 42 durch den Kunststoff 44 aufgehoben werden, können die beiden Spielpassungen 41 und 42 sehr großzügig dimensioniert sein, was bedeutet, daß nur noch wesentlich weniger genaue Maßtoleranzen bei der Herstellung der Teile als bisher eingehalten werden müssen; und wegen der großzügigen radialen Spielpassungen 41 und 42 zwischen der Vormontagebaugruppe 40 und dem Pumpenblock 4 kann der Anbau der Vormontagebaugruppe 40 an den Pumpenblock 4 sehr mühelos geschehen.

Es wird vorgeschlagen, sowohl im Bereich des Lagers 21 als auch im Bereich des Lagers 22 eine ausreichend große radiale Spielpassung 41 bzw. 42 vorzusehen, die dann nach dem Anbauen der Vormontagebaugruppe 40 an den Pumpenblock 4 durch Einbringen des Kunststoffs 44 aufgehoben wird, weil dann die beste Wirkung bezüglich Geräuschreduzierung und Bequemlichkeit beim Anbau des Motorgehäuses 6 an den Pumpenblock 4 erreicht wird. Es sei jedoch erwähnt, daß auch dann, wenn nur im Bereich des ersten Lagers 21 zwischen dem Vorsprung 26 und dem Pumpenblock 4 die radiale Spielpassung 41, die dann mit dem Kunststoffs 44 aufgehoben wird, vorgesehen wird, d. h. daß der äußere Lagerring 22b des Lagers 22 mit Pressung in den Pumpenblock 4 eingebaut wird, bezüglich der angestrebten Geräuschreduzierung und bezüglich der Bequemlichkeit beim Anbau des Antriebsmotors 2 an den Pumpenblock 4 ebenfalls eine Verbesserung erreichbar ist, die aber kaum so groß ist, wie wenn im Bereich beider Lager 21 und 22 die radialen Spielpassungen 41 und 42, die durch den Kunststoff 44 aufgehoben werden, vorgesehen sind. Andererseits auch dann, wenn die radiale Spielpassung 42, die nach dem Zusammenbau mit dem Kunststoff 44 aufgehoben wird, nur im Bereich des zweiten Lagers 22 vorgesehen ist, wobei der Vorsprung 26 wie bei bereits bekannten Pumpeneinheiten gestaltet ist, d. h. daß im Bereich des Vorsprungs 26 kein Spielausgleich durch eingebrachten Kunststoff erfolgt, ebenfalls eine Verbesserung bezüglich Dauerhaltbarkeit und/oder Geräuschminderung erreichbar ist, die aber kaum so deutlich ausfällt, wie wenn im Bereich der beiden Lager 21 und 22 die radialen Spielpassungen 41 und 42 vorgesehen sind, die anschließend mit dem Kunststoff 44 aufgehoben werden.

## Patentansprüche

1. Pumpeneinheit mit einer Kolbenpumpe mit mindestens einem Pumpenkolben in einem Pumpenblock (4) und einem an den Pumpenblock (4) angebauten Motorgehäuseteil (6a) eines Motorgehäuses (6) für einen Antriebsmotor (2), mit einer vom Antriebsmotor (2) antreibbaren und den Pumpenkolben antreibenden Welle (20), wobei die Welle (20) über mindestens ein durch das Motorgehäuseteil (6,6a) gehaltenes erstes Lager (21, 22) gelagert ist, wobei der Antriebsmotor (2), das Motorgehäuseteil (6, 6a), die Welle (20) und das mindestens eine Lager (21, 22) eine Vormontagebaugruppe (40) bilden, die mit mindestens einer radialen Spielpassung (41, 42) an den Pumpenblock (4) anbaubar ist, **dadurch gekennzeichnet, dass** das Motorgehäuseteil (6,6a) im Bereich des ersten Lagers (21) einen in eine im Pumpenblock (4) vorgesehene Vertiefung (10, 10a) eingreifenden Vorsprung (6f, 26) bildet, dass die radiale Spielpassung (41, 42) zwischen dem Vorsprung (6f, 26) und der Vertiefung (10, 10a) vorgesehen ist und dass die radiale Spielpassung (41, 42) nach dem Anbauen der Vormontagebaugruppe (40) an den Pumpenblock (4) durch in die Spielpassung (41, 42) eingebrachten Kunststoff (44) aufgehoben wird.

2. Pumpeneinheit nach Anspruch 1, **dadurch gekennzeichnet, dass** der Kunststoff (44) in die Spielpassung (41, 42) eingespritzt wird.

3. Pumpeneinheit nach Anspruch 1 oder 2, **dadurch gekennzeichnet, dass** das erste Lager (21) ein zwischen dem Motorgehäuseteil (6, 6a) und der Welle (20) eingepresstes Wälzlager (21, 21a, 21b) ist.

4. Pumpeneinheit nach Anspruch 1, 2 oder 3, **dadurch gekennzeichnet, dass** die Welle (20) über ein durch den Pumpenblock (4) gehaltenes zweites Lager (22) gelagert ist, wobei eine durch eingebrachten Kunststoff (44) aufgehobene radiale Spielpassung (42) zwischen dem zweiten Lager (22, 22b) und dem Pumpenblock (4) vorgesehen ist.

5. Pumpeneinheit nach einem der Ansprüche 1 bis 4, **dadurch gekennzeichnet, dass** das zweite Lager (22, 22a, 22b) zur Vormontagebaugruppe (40) gehört.

6. Pumpeneinheit nach Anspruch 5, **dadurch gekennzeichnet, dass** das zweite Lager (22) ein auf die Welle (20) aufgepresstes Wälzlager (22, 22a, 22b) ist.

7. Pumpeneinheit nach Anspruch 4, **dadurch gekennzeichnet, dass** zwischen dem Vorsprung (6f, 26) am Motorgehäuseteil (6, 6a) und der Vertiefung (10, 10a) im Pumpenblock (4) und zwischen dem zweiten Lager (22, 22b) und dem Pumpenblock (4) je eine radiale Spielpassung (41 und 42) vorgesehen ist, die von dem eingebrachten Kunststoff (44) aufgehoben wird.

8. Pumpeneinheit nach Anspruch 1, **dadurch gekennzeichnet, dass** die Welle (20) über ein weiteres Lager (23) an dem Motorgehäuse (6, 6b) gelagert ist, wobei das weitere Lager (23) dadurch gebildet wird, dass an dem Motorgehäuse (6, 6b) ein Lagerzapfen (52) vorgesehen ist, der in eine an der Welle (20) angebrachte, die Welle (20) axial überragende Buchse (48, 50) eingreift.

9. Pumpeneinheit nach Anspruch 8, **dadurch gekennzeichnet, dass** der Lagerzapfen (52) von einem an dem Motorgehäuse (6, 6b) angebrachten Bolzen gebildet wird.

10. Pumpeneinheit nach Anspruch 9, **dadurch gekennzeichnet, dass** der Lagerzapfen (52) an das Motorgehäuse (6, 6b) angeformt ist.

## Claims

1. Pump unit with a piston pump having at least one pump piston in a pump block (4) and with a motor-housing part (6a) of a motor housing (6) for a drive motor (2), the said motor-housing part being built onto the pump block (4), and with a shaft (20) capable of being driven by the drive motor (2) and driving the pump piston, the shaft (20) being mounted via at least one first bearing (21, 22) held by the motor-housing part (6, 6a), and the drive motor (2), motor-housing part (6, 6a), shaft (20) and at least one bearing (21, 22) forming a preassembly subgroup (40) which is capable of being built onto the pump block (4) with at least one radial clearance fit (41, 42), **characterized in that** the motor-housing part (6, 6a) forms, in the region of the first bearing (21), a projection (6f, 26) engaging into a depression (10, 10a) provided in the pump block (4), **in that** the radial clearance fit (41, 42) is provided between the projection (6f, 26) and the depression (10, 10a), and **in that**, after the preassembly subgroup (40) has been built onto the pump block (4), the radial clearance fit (41, 42) is cancelled by means of plastic (44) introduced into the clearance fit (41, 42).

2. Pump unit according to Claim 1, **characterized in that** the plastic (44) is injected into the clearance fit (41, 42).

3. Pump unit according to Claim 1 or 2, **characterized in that** the first bearing (21) is a rolling bearing (21, 21a, 21b) pressed in between the motor-housing part (6, 6a) and the shaft.

4. Pump unit according to Claim 1, 2 or 3, **characterized in that** the shaft (20) is mounted via a second bearing (22) held by the pump block (4), a radial clearance fit (42), cancelled by introduced plastic (44), being provided between the second bearing (22, 22b) and the pump block (4).

5. Pump unit according to one of Claims 1 to 4, **characterized in that** the second bearing (22, 22a, 22b) belongs to the preassembly subgroup (40).

6. Pump unit according to Claim 5, **characterized in that** the second bearing (22) is a rolling bearing (22, 22a, 22b) pressed onto the shaft (20).

7. Pump unit according to Claim 4, **characterized in that** a radial clearance fit (41 and 42), which is cancelled by the introduced plastic (44), is provided in each case between the projection (6f, 26) on the motor-housing part (6, 6a) and the depression (10, 10a) in the pump block (4) and between the second bearing (22, 22b) and the pump block (4).

8. Pump unit according to Claim 1, **characterized in that** the shaft (20) is mounted on the motor housing (6, 6b) via a further bearing (23), the further bearing (23) being formed such that the motor housing (6, 6b) has provided on it a bearing journal (52) which engages into a bush (48, 50) attached to the shaft (20) and projecting axially beyond the shaft (20).

9. Pump unit according to Claim 8, **characterized in that** the bearing journal (52) is formed by a bolt attached to the motor housing (6, 6b).

10. Pump unit according to Claim 9, **characterized in that** the bearing journal (52) is integrally formed onto the motor housing (6, 6b).

## Revendications

1. Unité de pompe comportant une pompe à pistons ayant au moins un piston de pompe dans un bloc de pompe (4) ainsi qu'une partie (6a) d'un boîtier de moteur (6) monté sur le bloc de pompe (4) et correspondant à un moteur d'entraînement (2),
un arbre (20) entraîné par le moteur d'entraînement (2) et entraînant le piston de pompe, l'arbre (20) étant monté par au moins un premier palier (21, 22) installé dans la partie de boîtier de moteur (6a, 6), et
le moteur d'entraînement (2), la partie de boîtier de moteur (6a, 6), l'arbre (20) et au moins un palier (21, 22) constituant un ensemble pré assemblé (40) qui se monte sur le bloc de pompe (4) avec au moins un jeu d'adaptation radial (41, 42),
**caractérisée en ce que**
la partie de boîtier de moteur (6a, 6) forme au niveau du premier palier (21), une partie en saillie (6f, 26) pénétrant dans une cavité (10, 10a) prévue dans le bloc de pompe (4), le jeu d'adaptation radial (41, 42) est prévu entre l'organe en saillie (6f, 26) et la cavité lisse (10a), et
après le montage de l'ensemble pré-assemblé (40) sur le bloc de pompe (4) on élimine le jeu d'adaptation radial (41, 42) par de la matière plastique (44) introduite dans les jeux d'adaptation (41, 42).

2. Unité de pompe selon la revendication 1,
**caractérisée en ce qu'**
on injecte la matière plastique (44) dans le jeu d'adaptation (41, 42).

3. Unité de pompe selon la revendication 1 ou 2,
**caractérisée en ce que**
le premier palier (21) est un palier de roulement (21, 21a, 21b) serré entre la partie de boîtier de moteur (6a, 6) et l'arbre (20).

4. Unité de pompe selon les revendications 1, 2 ou 3,
**caractérisée en ce que**
l'arbre (20) est monté par un second palier (22) tenu par le bloc de pompe (4), et un jeu d'adaptation radial (42) prévu entre le second palier (22, 22b) et le bloc de pompe (4), est éliminé par l'introduction de la matière plastique (44).

5. Unité de pompe selon l'une des revendications 1 à 4,
**caractérisée en ce que**
le second palier (22, 22a, 22b) fait partie de l'ensemble pré-assemblé (40).

6. Unité de pompe selon la revendication 5,
**caractérisée en ce que**
le second palier (22) est un palier à roulement (22, 22a, 22b) pressé de force sur l'arbre (20).

7. Unité de pompe selon la revendication 4,
**caractérisée par**
chaque fois un jeu d'adaptation radial (41, 42) prévu entre l'organe en saillie (6f, 26) de la partie de boîtier de moteur (6a, 6) et la cavité (10, 10a) du bloc de pompe (4), et entre le second palier (22, 22b) et le bloc de pompe (4), ce jeu d'adaptation étant éliminé par l'introduction de matière plastique (44).

8. Unité de pompe selon la revendication 1,
**caractérisée en ce que**
l'arbre (20) est monté dans le boîtier de moteur (6, 6b) par l'intermédiaire d'un autre palier (23) et cet autre palier (23) est formé par un tourillon de palier (52) prévu sur le boîtier de moteur (6, 6b) et qui vient prendre dans une douille (48, 50) montée sur l'arbre (20) et dépassant axialement l'arbre (20).

9. Unité de pompe selon la revendication 8,
**caractérisée en ce que**
le tourillon de palier (52) est formé par un goujon prévu sur le boîtier de moteur (6, 6b).

10. Unité de pompe selon la revendication 9,
**caractérisée en ce que**
le tourillon de palier (52) est formé sur le boîtier de moteur (6, 6b).
